# EUROPÄISCHE PATENTANMELDUNG

(11) **EP 3 876 169 A1**
(43) Veröffentlichungstag der Anmeldung: **08.09.2021**
(21) Anmeldenummer: 21159825.5
(22) Anmeldetag: 01.03.2021
(51) Int. Cl.: G06Q 10/04

(54) **VORVERARBEITUNGSVERFAHREN ZUR BEREITSTELLUNG HOMOGENER DATENBLÖCKE**

(30) Priorität: 06.03.2020 DE 102020202869
(71) Anmelder: Robert Bosch GmbH, 70442 Stuttgart (DE)
(72) Erfinder: Torikka, Tapio, 97816 Lohr (DE)

(57) **Zusammenfassung**

Die Erfindung betrifft ein Vorverarbeitungsverfahren zur Bereitstellung homogener Datenblöcke aus zeitlich geordneten, inhomogenen Datensätzen mit Werten erfasster Betriebsparameter einer Maschine, um für die Überwachung der Maschine durch auf maschinellem Lernen basierende Algorithmen geeignete Datenblöcke zu erhalten Das Verfahren umfasst Bilden von Datenblöcken aus den Datensätzen, so dass jeder Datenblock die Datensätze umfasst, die innerhalb einer jeweiligen Zeitspanne liegen, Anpassen der Menge von Datensätzen in den Datenblöcken, so dass die Datenblöcke eine vorbestimmte Anzahl vollständiger Datensätze enthalten, und Normalisieren der Datensätze in den Datenblöcken, so dass die Datensätze Werte für vorbestimmte Betriebsparameter aufweisen, die innerhalb vorbestimmter Wertebereiche liegen.

## Beschreibung

Die vorliegende Erfindung betrifft ein Vorverarbeitungsverfahren zur Bereitstellung homogener Datenblöcke aus zeitlich geordneten, inhomogenen Datensätzen mit Werten erfasster Betriebsparameter einer Maschine, um für die Überwachung der Maschine durch auf maschinellem Lernen basierende Algorithmen geeignete Datenblöcke zu erhalten. Insbesondere betrifft die Erfindung ein Verfahren zur Vorverarbeitung von erfassten Maschinen-Sensordaten, so dass diese für das Training und den Einsatz in auf maschinellem Lernen basierenden Algorithmen zur Überwachung der Maschine geeignet sind.

### Stand der Technik

Zur Überwachung von Maschinen bzw. Maschinenteilen können Modelle, die Betriebszustände der Maschine codieren, eingesetzt werden. Diese Modelle können durch Trainieren von auf maschinellem Lernen basierenden Algorithmen erhalten werden, wobei beim Training Trainingsdatensätze mit während des Betriebs der Maschine erfassten Parametern, insbesondere Sensordaten, verwendet werden. Das Training der Algorithmen und die Qualität der trainierten Modelle, d.h. insbesondere ihre Fähigkeit, anomale Betriebszustände der Maschine zu erkennen, hängt wesentlich von strukturellen Eigenschaften der erfassten Trainingsdatensätze ab.

In der industriellen Anwendung tritt oftmals eine große Varianz beim Betrieb von Maschinen ein, z.B. wird ein und dieselbe Maschine oder werden baugleiche Maschinen in verschiedensten Anwendungen eingesetzt. Selbst innerhalb derselben Anwendung treten Betriebszustände auf, die für das Training von Maschinen-Überwachungs-Modellen nicht geeignet sind, etwa ein Standby-Zustand. Daraus ergibt sich eine große Varianz der erfassten Daten, die erfassten Daten sind also sehr inhomogen.

Diese Inhomogenität wird weiter vergrößert, da Sensoren, die in der Praxis eingesetzt werden, oftmals Daten in sehr unterschiedlichen Wertebereichen und von unterschiedlicher Qualität liefern, so können Sensoren etwa kurzzeitig ausfallen oder die Datenübertragung kann gestört sein; auch kann es vorkommen, dass aufgrund einer Fehlfunktion des Sensors unplausible Messwerte geliefert werden.

Ebenso kann die Menge an erfassten und beim Training verwendeten Betriebsparametern und Datensätzen stark unterschiedlich sein, d.h. die Trainingsdatensätze sind inhomogen bezüglich der erfassten Betriebsparameter und der Menge der Daten. Werden verschiedene Modelle mit unterschiedlich großen Mengen an Datensätzen trainiert, so resultiert dies in inhomogenen Eigenschaften der Modelle, etwa in unterschiedlich genauen Fehlergrenzen der Modelle, bezüglich welcher das jeweilige Modell anomale von regulären Betriebszuständen trennt. Dadurch ist es schwer, diese verschiedenen Modelle zu vergleichen und zu entscheiden, welches der Modelle im Betrieb der Maschine eingesetzt werden soll.

Zusammengefasst führen Inhomogenitäten in den Datensätzen und den darin enthaltenen Datenwerten zu einer mangelhaften Qualität und mangelnden Vergleichbarkeit der damit trainierten Modelle. Beim anschließenden Einsatz zur Maschinenüberwachung dieser Modelle können dies und die ebenfalls inhomogen Datensätze, auf die die Modelle im Einsatz angewendet werden, zu fehlerhaften und inkonsistenten Ergebnissen führen.

### Offenbarung der Erfindung

Erfindungsgemäß werden ein Vorverarbeitungsverfahren zur Bereitstellung homogener Datenblöcke, eine entsprechende Recheneinheit, ein entsprechendes Computerprogramm und ein entsprechendes Speichermedium mit den Merkmalen der unabhängigen Patentansprüche vorgeschlagen. Vorteilhafte Ausgestaltungen sind Gegenstand der Unteransprüche sowie der nachfolgenden Beschreibung.

Mittels Datenblöcken, die durch das erfindungsgemäße Verfahren bereitgestellt werden, wird einerseits ein effektives Training von untereinander vergleichbaren Modellen ermöglicht und andererseits liefern die damit trainierten Modelle beim späteren praktischen Einsatz in der Maschinenüberwachung konsistente Ergebnisse, wenn die während des praktischen Einsatzes erfassten Datensätze ebenfalls mit dem erfindungsgemäßen Verfahren aufbereitet werden. Das Zusammenfassen der Datensätze in Datenblöcken bestimmter Länge stellt sicher, dass das Training jeweils auf der gleichen Datenmenge basiert.

Das erfindungsgemäße Vorverarbeitungsverfahren stellt homogene Datenblöcke aus zeitlich geordneten, inhomogenen Datensätzen mit Werten erfasster Betriebsparameter einer Maschine bereit, die für die Überwachung der Maschine durch auf maschinellem Lernen basierende Algorithmen geeignet sind. Das Vorverarbeitungsverfahren umfasst dazu das Bilden von Datenblöcken aus den Datensätzen, so dass jeder Datenblock die Datensätze umfasst, die innerhalb einer jeweiligen Zeitspanne liegen; das Anpassen der Menge von Datensätzen in den Datenblöcken, so dass die Datenblöcke eine vorbestimmte Anzahl vollständiger Datensätze enthalten; und das Normalisieren der Datensätze in den Datenblöcken, so dass die Datensätze Werte für vorbestimmte Betriebsparameter aufweisen, die innerhalb vorbestimmter Wertebereiche liegen.

Den Datensätzen ist jeweils ein Zeitpunkt zugeordnet. Vorzugsweise weisen die Zeitspannen für verschiedene Datenblöcke die gleiche Länge auf. Die so vorverarbeiteten Datenblöcke können vorteilhafterweise beim Training von auf maschinellem Lernen basierenden Algorithmen und auch beim Einsatz der trainierten Algorithmen zur Überwachung von Maschinen und Erkennung anomaler Zustände verwendet werden.

Das Anpassen der Menge erfolgt so, dass die Datenblöcke sowohl homogen in ihrer Länge, d.h. die gleiche vorbestimmte Anzahl von Datensätzen, als auch in den darin enthaltenen Betriebsparametern sind. Unter Normalisieren ist allgemein zu verstehen, dass die Werte der Betriebsparameter in eine Form gebracht werden, die eine effiziente Verwendung in auf maschinellem Lernen basierenden Algorithmen bzw. Modellen ermöglicht. Dies kann insbesondere einschließen, dass sich die Werte innerhalb bestimmter Wertebereiche befinden bzw. dass einzelne Werte nicht zu stark von üblichen Wertebereichen abweichen (Ausreißer), und dass die Verteilung bzw. Variation der Werte an die Verwendung in auf maschinellem Lernen basierenden Algorithmen angepasst ist.

Unter "Betriebsparameter" einer Maschine sollen Daten verstanden werden, die erfasst werden, um den Betrieb der Maschine zu überwachen. Die Erfassung kann z.B. in regelmäßigen Zeitabständen erfolgen. Die entsprechenden konkreten Werte der Betriebsparameter sind dann Betriebsparameter-Werte. Solche Werte sind dann in den jeweiligen Datensätzen enthalten. Insbesondere handelt es sich hierbei um Sensorwerte, die durch an der Maschine angeordnete Sensoren gemessen werden. Es kann sich aber auch um vorgegebene, etwa durch die Steuerung der Maschine, Parameter handeln. Weiter ist es möglich, dass die Betriebsparameter abgeleitete Werte umfassen, etwa Werte einer schnellen Fourier-Transformation (FFT) regelmäßiger Messwerte. Bei der zu überwachenden Maschine kann es sich beispielsweise um eine Hydraulikanlage handeln; in diesem Fall können die Sensordaten beispielhaft ausgewählt sein aus Druck und Volumenstrom von Hydraulikflüssigkeiten, Temperaturen von Hydraulikflüssigkeiten oder Maschinenteilen, Stellungen eines Hydraulikzylinders oder auch Drehmoment, Leistungsabgabe von Motoren, die Pumpen antreiben.

Die Datensätze enthalten jeweils Werte von Betriebsparametern, die während des Betriebs der Maschine erfasst wurden. Wie bereits vorstehend erwähnt, sind die Betriebsparameter typischerweise durch Sensoren erfasste Parameter, die Betriebszustände der Maschine charakterisieren. Beispiele für Betriebsparameter sind Temperaturen von Maschinenteilen oder Betriebsmitteln (etwa Hydraulikflüssigkeiten), Drücke, Volumenströme, die Arbeitsleistung von Motoren oder Pumpen, Drehzahlen und Ähnliches. Die durch die Sensoren gemessenen Werte stellen Betriebsparameterwerte dar. Die Betriebsparameter werden jeweils zu aufeinanderfolgenden Zeitpunkten erfasst, wobei bevorzugt die Zeitpunkte regelmäßig beabstandet sind, d.h. mit einer bestimmten Frequenz erfasst werden, z.B. mit einer Frequenz zwischen 1 Hz und 10 kHz. Jeder der Datensätze entspricht also jeweils einem Zeitpunkt, insbesondere sind die Datensätze zeitlich geordnet. Die Datensätze können nicht nur Betriebsparameterwerte enthalten, die zu dem Zeitpunkt, dem der Datensatz entspricht, erfasst wurden, sondern, insbesondere im weiteren Verlauf des Verfahrens, auch Betriebsparameterwerte, die zu anderen Zeitpunkten erfasst wurden und/oder aus Betriebsparameterwerten eines oder mehrerer Zeitpunkte abgeleitete bzw. berechnete Datenwerte. Letztere, d.h. abgeleitete bzw. berechnete Datenwerte, werden zur Vereinfachung ebenfalls als Betriebsparameterwerte bezeichnet, da sie ebenfalls Parameter darstellen, die den Betrieb bzw. Betriebszustand der Maschine charakterisieren, also unter den allgemeinen Begriff "Betriebsparameter" fallen.

Im Folgenden werden der Begriff "Modell", wie er im Rahmen dieser Erfindung verwendet wird, und Maschinen-Überwachungsverfahren, die auf diesen Modellen basieren, kurz erläutert. Unter Modell ist die Modellierung von Betriebszuständen bzw. von deren gemessenen Betriebsparametern durch einen auf künstlicher Intelligenz bzw. maschinellem Lernen basierenden Algorithmus zu verstehen. In einem als Training oder Lernen bezeichneten Vorgang generieren Algorithmen des maschinellen Lernens basierend auf Beispieldaten (sogenannten Trainingsdaten) ein mathematisches Modell, um Vorhersagen über einen Vorgang (hier Betriebszustände einer Maschine) zu machen, ohne dafür explizit programmiert zu sein. Ein Modell kann als eine Abbildung bzw. Funktion betrachtet werden, die Eingabewerte, hier die Betriebsparameter der zu überwachenden Maschine, auf Ausgabewerte abbildet.

Die spezielle Art und der innere Aufbau des Modells bzw. des Algorithmus sind für die Durchführung des erfindungsgemäßen Verfahrens nicht essentiell; es muss sich lediglich um ein Modell handeln, das einen Satz (Vektor) von Eingabewerten - das sind hier die Werte von Betriebsparametern -auf eine Ausgabe abbildet, aus der ein Fehler (Fehlerwert) abgeleitet werden kann, der eine Entfernung von im Modell codierten Referenz-Betriebszuständen angibt, wobei diese Entfernung im Sinne eines Fehlermaßes des Modells bzw. Algorithmus gemessen wird. Die Referenz-Betriebszustände werden im Modell durch maschinelles Lernens codiert, wobei das Modell, genauer der Algorithmus, auf dem das Modell basiert, anhand von Trainingsdaten bzw. Referenzdaten, die die Referenz-Betriebszustände charakterisieren, trainiert wird. Das Training erfolgt normalerweise so, dass der Fehlerwert der Trainingsdatensätze bezüglich des Fehlermaßes minimiert wird. Die Trainingsdaten beinhalten Betriebsparameter-Werte, die beispielsweise während eines Referenzbetriebs der Maschine erfasst wurden.

Für die Fehlerüberwachung von Maschinen werden insbesondere Modelle bzw. Algorithmen eingesetzt, die die Betriebszustände so modellieren, dass die Eingabewerte, also die Betriebsparameter-Werte, als Ausgabewerte des Modells zurückgewonnen werden. Sozusagen rekonstruiert das Modell die Eingabe, entsprechende Modelle könnten also als "Rekonstruktions-Modell" oder "rekonstruierendes Modell" bezeichnet werden. Eine Fehlermetrik (Fehlermaß) kann dann durch einen Vergleich der Ausgabewerte mit den eingegebenen Betriebsparametern (die ja die Eingabewerte des Modells sind) erhalten werden, etwa als mittlere quadratische Abweichung. Modelle, die von Maschinenüberwachungsverfahren zur Anomalieerkennung eingesetzt werden, sind typischerweise so gewählt, dass innerhalb des Modells eine dimensionale Reduktion der Parameter erfolgt (ein Nachbilden der identischen Abbildung ist also nicht möglich). Ein Betriebszustand ist dann sozusagen durch das Modell in einem dimensional reduzierten Raum codiert. Das Modell erzeugt die Ausgabewerte aus diesem dimensional reduzierten Raum; dies kann als Decodierung gesehen werden. Tritt in der überwachten, durch das Modell modellierten Maschine eine Anomalie bzw. Fehlfunktion auf, führt dies zu Abweichungen der Betriebsparameter, die durch die Codierung nicht mehr umfasst sind, so dass die Fehlermetrik, die als Anomaliemaß dient, einen höheren Wert ergibt. Liegt der durch die Fehlermetrik bestimmte Fehler über einer vorgegebenen Fehlergrenze des Modells, so wird von einem anomalen bzw. fehlerhaften Betriebszustand der Maschine ausgegangen. Der Einsatz solcher Modelle zur Anomalieerkennung und zur Überwachung von Betriebszuständen von Maschinen ist im Prinzip bekannt. Typischerweise sind die Modelle bzw. der Algorithmus als (künstliche) neuronale Netzwerke, z.B. Autoencoder, verwirklicht.

Auf maschinellem Lernen basierende Algorithmen bzw. Modelle werden im Weiteren vereinfacht als ML-Algorithmen bzw. ML-Modelle bezeichnet.

Gemäß einer bevorzugten Ausführungsform umfasst das Normalisieren ein Entfernen der zu mindestens einem vorbestimmten Betriebsparameter gehörigen Betriebsparameterwerte aus allen Datensätzen. Dadurch können Betriebsparameter, die als nicht hilfreich für die Überwachung durch ML-Algorithmen und deren Training erachtet werden, was sich z.B. nach einer ersten Trainingsphase herausstellen kann, aus den Datensätzen entfernt werden, so dass die ML-Algorithmen weniger Eingangswerte berücksichtigen müssen und ihr Training und Einsatz entsprechend vereinfacht wird.

Bevorzugt umfasst das Normalisieren ein Bestimmen von Datensätzen, in denen mindestens ein Betriebsparameterwert fehlt, und ein Ergänzen der fehlenden Betriebsparameterwerte in den bestimmten Datensätzen mit entsprechenden auf Grundlage anderer Datensätze ermittelten Betriebsparameterwerten, bevorzugt dem jeweils vorhergehenden oder nachfolgenden Datensatz entnommenen oder aus anderen Datensätzen berechneten (z.B. extrapolierten) Betriebsparameterwerten, oder mit einem vorbestimmten Wert, z.B. Null. Während des regulären Betriebs der Maschine kann es vorkommen, dass einige Betriebsparameter teilweise nicht erfasst werden. Beispielsweise können Sensoren kurzzeitig ausfallen, verschiedene Sensoren können verschiedene Messfrequenzen aufweisen, so dass die den Datensätzen entsprechende Abtastrate nicht passend für alle Sensoren gewählt werden kann, oder es können bei der Übermittlung der Sensormesswerte Fehler oder Aussetzer auftreten, z.B. durch elektromagnetische Störungen bei einer drahtlosen Übermittlung. In diesem Fall können die Betriebsparameterwerte ergänzt werden, so dass alle Datensätze vollständig sind und die Datenwerte einen sinnvollen Wert aufweisen, insbesondere einen Wert, der im Bereich der anderen Werte dieses Betriebsparameters liegt.

Vorteilhafterweise umfasst das Anpassen für mindestens einen der Datenblöcke ein Löschen eines oder mehrerer Datensätze aus dem mindestens einen Datenblock, wobei bevorzugt der eine oder die mehreren Datensätze zufällig ausgewählt sind oder aufeinanderfolgende Datensätze sind, die weiter bevorzugt am Ende des mindestens einen Datenblocks liegen. Entsprechend dieser Ausführung kann die Menge an Daten, die verarbeitet werden muss, verringert werden, etwa wenn nicht genügend Rechenleistung zur Verfügung steht. Für den Fall, dass beim Überwachen der Maschine ein zeitlicher Zusammenhang zwischen den Datensätzen wesentlich ist, etwa bei der Verwendung rekurrenter neuronaler Netze mit Zeitverzögerung als ML-Algorithmen, sollten aufeinanderfolgende Datensätze entfernt werden, um diesen zeitlichen Zusammenhang nicht zu zerstören.

Das Normalisieren kann für jeden Datensatz und für mindestens einen Betriebsparameter ein Hinzufügen der Werte des mindestens einen Betriebsparameters aus einem oder mehreren Datensätzen zu dem Datensatz umfassen, wobei die zeitliche Position des einen oder der mehreren Datensätze relativ zu dem Datensatz, zu dem sie hinzugefügt werden, jeweils die gleiche ist, wobei bevorzugt der eine oder die mehreren Datensätze zeitlich unmittelbar vor und/oder nach dem Datensatz liegen, zu dem sie hinzugefügt werden. Auf diese Weise enthalten die Datensätze Werte eines Betriebsparameters, die zu verschiedenen Zeiten erfasst wurden, zum Beispiel alle Werte des Betriebsparameters innerhalb eines zeitlichen Fensters oder alle Werte des Betriebsparameters aus M aufeinanderfolgenden Datensätzen, die verschieden von dem Datensatz sind, zu dem die Betriebsparameterwerte hinzugefügt werden, wobei M eine ganze Zahl größer gleich 1 ist. Dies kann das Training von Algorithmen für hochdynamische Prozesse erleichtern, und ebenso die Überwachung, wenn später die Erfindung zur Bereitstellung homogener Datenblöcke bei der Überwachung und Fehlererkennung der entsprechenden Maschine eingesetzt wird. Bevorzugt ist, dass die Betriebsparameterwerte aus Datensätzen entnommen werden, die zeitlich vor dem Datensatz, zu dem sie hinzugefügt werden, liegen. Dadurch wird vermieden, dass in einem Datensatz zukünftige Informationen enthalten sind. Am meisten bevorzugt ist hier, dass die Betriebsparameterwerte aus Datensätzen entnommen werden, die zeitlich unmittelbar vor dem Datensatz liegen, zu dem sie hinzugefügt werden.

Vorteilhafterweis umfasst das Normalisieren ein Ergänzen jedes der Datensätze um einen aus den Betriebsparameterwerten von mindestens einem Datensatz abgeleiteten Betriebsparameterwert, wobei der abgeleitete Betriebsparameterwert aus den im jeweiligen Datensatz enthaltenen Betriebsparameterwerten berechnet wird oder der abgeleitete Betriebsparameterwert aus Betriebsparameterwerten mehrerer Datensätze berechnet wird, wobei insbesondere Werte einer schnellen Fourier-Transformation berechnet werden. Gemäß einer Ausgestaltung dieser Ausführung kann das Normalisieren weiter umfassen ein Löschen der Werte mindestens eines Betriebsparameters, aus dem die abgeleiteten Betriebsparameter-werte berechnet wurden, in den Datensätzen.

Entsprechend diesen Ausführungsformen wird ermöglicht, einfache Zusammenhänge innerhalb eines Datensatzes, von denen der Fachmann vermutet, dass sie wesentlich sind, z.B. eine Differenz zwischen zwei Betriebsparameterwerten, etwa ein Differenzdruck oder eine Differenztemperatur, direkt in den Datensätzen zu codieren, um das spätere maschinelle Lernen zu vereinfachen. Werden Betriebsparameterwerte aus verschiedenen Datensätzen, die ja verschiedenen Erfassungszeitpunkten entsprechen, in die Berechnung mit einbezogen, können zeitliche Zusammenhänge in den Datensätzen codiert werden. Beispielsweise können bei rotierenden Maschinenkomponenten eine schnelle Fourier-Transformation (FFT, Fast Fourier Transformation) oder Kennzahlen über das Frequenzspektrum hilfreich sein. Offensichtlich sollten die abgeleiteten Betriebsparameterwerte jeweils für alle Datensätze auf die gleiche Weise aus jeweils den gleichen Betriebsparameterwerten berechnet werden, wobei die relative zeitliche Position jeweils gleich ist. Gegebenenfalls können die ursprünglichen Betriebsparameter nach Abschluss der Berechnungen gelöscht werden, um die Anzahl von Eingabeparametern für den auf maschinellem Lernen basierenden Algorithmus zu verringern.

Das Verfahren kann weiterhin umfassen ein Festlegen mehrerer Gruppen von Betriebsparametern; ein Bilden mehrerer Teildatensätze aus jedem Datensatz, wobei die Teildatensätze jeweils Werte einer der Gruppen von Betriebsparametern enthalten; und ein Bilden mehrerer Teildatenblöcke aus jedem der Datenblöcke, so dass die Teildatenblöcke jeweils die einer der Gruppen von Betriebsparametern entsprechenden Teildatensätze enthalten. Entsprechend dieser Ausführung wird ermöglicht, verschiedenen Maschinenkomponenten entsprechende Teildatenblöcke zu bilden, was gegebenenfalls die benötigte Rechenleistung verringert, die im Allgemeinen bei ML-Algorithmen nicht linear, sondern stärker, mit der Anzahl von Eingabewerten ansteigt. Die Mengen der in den Gruppen der Betriebsparameter enthaltenen Betriebsparameter müssen nicht disjunkt sein, die Gruppen können sich also überschneiden, d.h. ein Betriebsparameter kann in mehreren Gruppen enthalten sein.

Bevorzugt umfasst das Anpassen ein Löschen von Datensätzen, die mindestens einen Betriebsparameter mit einem Wert -je nach konkretem Anwendungsfall - innerhalb oder außerhalb eines vorbestimmten Wertebereichs, der bevorzugt beschränkt ist, für den jeweiligen Betriebsparameter aufweisen. Liegen Betriebsparameter in bestimmten Wertebereichen bzw. andersherum betrachtet außerhalb bestimmter Wertebereiche, so kann dies ein Hinweis darauf sein, dass sich die Maschine in einem Zustand befindet, der vom Training des ML-Algorithmus ausgeschlossen werden sollte. Ein Beispiel hierfür ist der Standby-Betrieb einer Hydraulikanlage, während dem der Druck einer Hydraulikflüssigkeit gleichbleibend sehr niedrig ist, im Unterschied zum Lastbetrieb, während dem der Druck sehr viel höher ist, so dass entsprechend Datensätze, in denen der Druck außerhalb eines hohen Bereichs liegt, bzw. Datensätze, in denen der Druck innerhalb eines niedrigen Wertebereichs, der den Standby-Betrieb kennzeichnet, liegt, gelöscht werden sollten. Ein anderes Beispiel ist, Datensätze zu löschen, wenn ein Motorstrom, der einer der erfassten Betriebsparameter ist, unter einer gewissen Schwelle (etwa 10 A) liegt, d.h. wenn der Motorstrom im Bereich von Null bis zur Schwelle (etwa innerhalb von 0 - 10 A) liegt. So kann erkannt werden, ob die Maschine läuft, falls kein Ein/Aus-Signal von der Maschinensteuerung verfügbar ist.

Diese Ausgestaltung erlaubt vorteilhaft eine Filterung der Datensätze und damit der Datenblöcke nach unterschiedlichen Betriebszuständen. Unterschiedliche Betriebszustände, z.B. während unterschiedlicher Produktionszyklen, sind oftmals dadurch gekennzeichnet, dass sich bestimmte Betriebsparameter innerhalb bzw. außerhalb bestimmter Wertebereiche befinden. Werden in einem Datenblock Datensätze ausgeschlossen, in denen die Betriebsparameter außerhalb dieser Wertebereiche liegen, ist es möglich, Datenblöcke zu bilden, während derer gezielt ein bestimmter Betriebszustand vorlag. Die ML-Algorithmen können damit gezielt trainiert werden, diesen bestimmten Betriebszustand zu erkennen.

Weitergehend ist hier eine logische Verknüpfung (AND, OR, XOR usw.) von Filterbedingungen möglich. D.h. es ist für jeden von mehreren Betriebsparametern ein jeweiliger Wertebereich vorgegeben. Zwischen den Bedingungen, ob oder ob nicht diese mehreren Betriebsparameter in den jeweiligen Wertebereichen liegen, sind beliebige logische Verknüpfungen möglich. Insbesondere ist es möglich, diese mehreren Betriebsparameter in eine oder mehrere Gruppen einzuteilen und Datensätze zu löschen, wenn für wenigstens eine Gruppe gilt, dass alle in der Gruppe umfassten Betriebsparameter innerhalb des jeweiligen vorgegebenen Wertebereichs liegen. Enthält eine Gruppe als Betriebsparameter z.B. einen ersten Förderdruck einer ersten Hydraulikpumpe und einen zweiten Förderdruck einer zweiten Hydraulikpumpe mit dem Wertebereich unter 100 bar (Wertebereich 0 - 100 bar; wenn Betriebsdruck z.B. 150 bar) für beide, so führt dies dazu, dass Datensätze gelöscht werden, in denen der erste Förderdruck und der zweite Förderdruck unter 100 bar liegen. Dies kann verwendet werden, wenn eine Pumpe für die Maschinenfunktion nötig ist und abwechselnd eine der beiden Pumpen aktiv ist und kein Ein/Aus-Signal von der Maschinensteuerung verfügbar ist. Definiert man noch eine zweite Gruppe, die z.B. den obengenannten Motorstrom enthält, ergibt sich eine und-/oder-Verknüpfung, d.h. unter Verwendung der jeweils beispielhaft angegebenen Zahlenwerte werden Datensätze gelöscht, wenn 'der erste Förderdruck und der zweite Förderdruck unter 100 bar liegt' oder 'der Motorstrom unter 10 A liegt'.

Das Anpassen kann für mindestens einen Datenblock umfassen ein Hinzufügen von mindestens einem Datensatz zu dem mindestens einen Datenblock, wobei der mindestens eine Datensatz, der hinzugefügt wird, auf einem vorhandenen Datensatz basiert, wobei bevorzugt die Werte der Betriebsparameter in dem vorhandenen Datensatz innerhalb einer vorbestimmten Bandbreite oder entsprechend einer statistischen Verteilung variiert werden, wobei, falls mehrere Datensätze basierend auf dem vorhandenen Datensatz hinzugefügt werden, die Betriebsparameterwerte unterschiedlicher hinzuzufügender Datensätze unabhängig voneinander variiert werden. Durch Hinzufügen von Datensätzen mit Betriebsparameterwerten, die gegenüber bereits vorhandenen innerhalb eines gewissen Bereichs variieren, also durch Erzeugen eines Rauschens der Betriebsparameterwerte in den Datenblöcken, kann beim Training des ML-Algorithmus ein robusteres Modell für die Maschine erhalten werden.

Genauer gesagt werden, ausgehend von den im vorhandenen Datensatz gegebenen Betriebsparameterwerten, die Betriebsparameterwerte in den hinzuzufügenden Datensätzen erzeugt, indem der gegebene Wert um einen zufälligen Differenzwert geändert wird. Der Differenzwert kann entsprechend einer statistischen Verteilung zufällig gewählt werden. Z.B. kann als Verteilung eine Standardverteilung, bevorzugt mit Mittelwert Null, genommen werden. Die Standardabweichung der Standardverteilung sollte dann einem gewissen Prozentsatz des Betriebsparameterwertes entsprechen, etwa 0,5%, 1%, 2%, 3% oder 5%.

Aus einem bereits vorhanden Datensatz können einer oder mehrere neue, hinzuzufügende Datensätze gewonnen werden, aus einem Datensatz können z.B. 1, 2, 3, 5, 7, 9 oder 10 neue Datensätze gewonnen werden. Die Menge an Datensätzen kann um einen entsprechenden Faktor erhöht werden.

Vorzugsweise umfasst das Normalisieren ein Normieren der Betriebsparameterwerte, wobei das Normieren bevorzugt ein Ändern von Betriebsparameterwerten umfasst, die größer als ein vorbestimmter Maximalwert oder kleiner als ein vorbestimmter Minimalwert des jeweiligen Betriebsparameters sind, auf einen Wert, der gleich dem vorbestimmten Maximalwert bzw. dem vorbestimmten Minimalwert ist.

Durch die Normierung wird erreicht, dass die Wertebereiche der Betriebsparameter bestimmten Vorgaben entsprechend der Verwendung in einem ML-Algorithmus entsprechen. Dazu werden typischerweise neue Werte aus den Betriebsparameterwerten berechnet, die den Vorgaben genügen. Dies kann beispielsweise geschehen, indem eine statistische Verteilung der Werte eines Betriebsparameters bestimmt wird und die Werte dann bezogen auf diese Verteilung angegeben werden. Hier ist es z.B. möglich, die Werte entsprechend einer Standardverteilung anzugeben, d.h. die Betriebsparameterwerte werden als Anzahl von Standardabweichungen von einem Mittelwert des jeweiligen Betriebsparameters angegeben; selbiges ist mit anderen Verteilungen und diese charakterisierenden Abweichungsgrößen möglich. Weiterhin können Betriebsparameterwerte, die weit von typischen Werten entfernt liegen, d.h. außerhalb des durch den Minimalwert und den Maximalwert definierten Bereichs, was z.B. auf einen Messfehler hindeutet, auf einen typischen Wert gesetzt werden, so dass das Training und gegebenenfalls der Einsatz des ML-Algorithmus nicht durch solche Werte gestört werden.

Das Normalisieren kann bevorzugt umfassen ein Skalieren der Betriebsparameterwerte auf einen vorbestimmten Wertebereich, wobei der vorbestimmte Wertebereich bevorzugt zwischen 0 und 1 oder zwischen -1 und 1 liegt. Durch die Skalierung werden für ML-Algorithmen passende Wertebereiche ermöglicht.

Eine erfindungsgemäße Recheneinheit, z.B. ein Steuergerät einer Hydraulikanlage, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt ein Diagramm, das den prinzipiellen Ablauf des erfindungsgemäßen Verfahrens wiedergibt;
Figur 2 zeigt ein Ablaufdiagramm einer bevorzugten Ausführungsform der Erfindung; und
Figur 3 skizziert die aus den in Figur 2 gezeigten Verfahrensschritten resultierenden Datenblockstrukturen.

### Detaillierte Beschreibung der Zeichnung

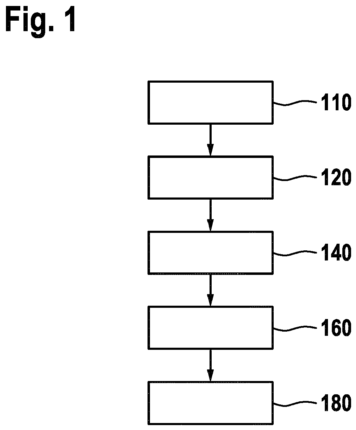

In Figur 1 ist der prinzipielle Ablauf des erfindungsgemäßen Verfahrens und der weiteren Verwendung der durch das Verfahren bereitgestellten homogenisierten Datenblöcke in einer bevorzugten Ausführungsform dargestellt.

Das Verfahren beginnt mit dem Bilden 110 von Datenblöcken aus ursprünglich erfassten Datensätzen. Dabei werden jeweils Datensätze innerhalb bestimmter Zeitspannen zu einem Datenblock zusammengefasst. Die Zeitspannen, die verschiedenen Datenblöcken entsprechen, weisen bevorzugt die gleiche Dauer auf und überlappen sich ebenso bevorzugt nicht. Denkbar sind hier beispielsweise Datenblöcke, die sich über Zeitspannen von 5 Minuten, 10 Minuten, 15 Minuten, 30 Minuten, 45 Minuten, 60 Minuten o.ä. erstrecken.

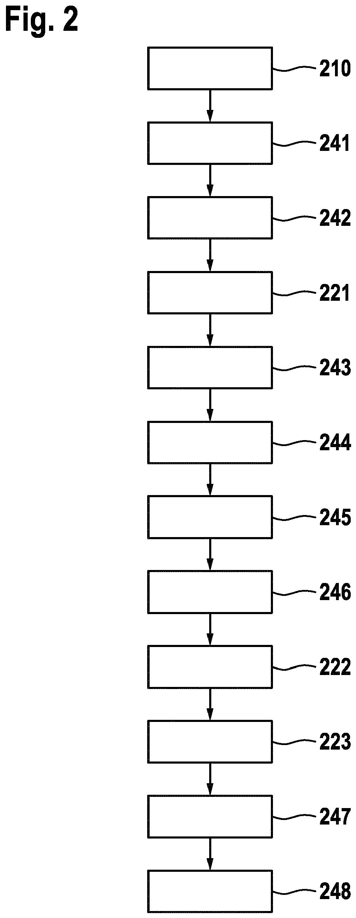

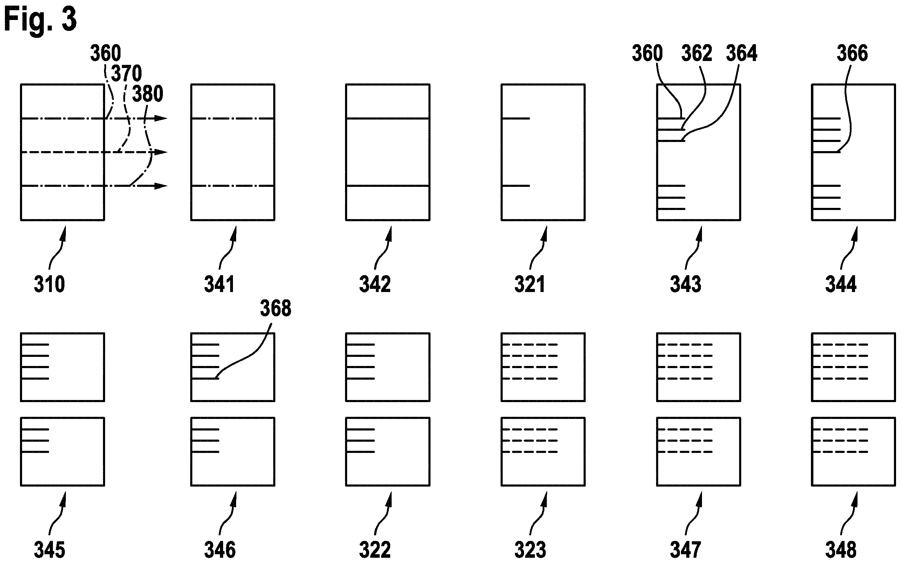

In weiteren Schritten findet dann eine Anpassung 120 der Menge der in den Datenblöcken umfassten Datensätze und eine Normalisierung 140 der in den Datensätzen umfassten Betriebsparameterwerte statt. Anders als dargestellt, müssen diese beiden Schritte nicht aufeinanderfolgend durchgeführt werden, sondern können nebeneinander oder in umgekehrter Reihenfolge durchgeführt werden. Insbesondere können die beiden Schritte 120, 140 jeweils mehrere Teilschritte umfassen, deren Reihenfolge beliebig ist. Eine besonders bevorzugte Abfolge von möglichen Teilschritten ist in den Figuren 2 und 3 dargestellt.

Als Resultat der Schritte 120, 140 werden homogenisierte Datenblöcke bereitgestellt, die für das Training 160 eines auf maschinellem basierenden Algorithmus für die Überwachung der Maschine geeignet sind.

Der mit diesen Datenblöcken trainierte Maschinen-Überwachungs-Algorithmus kann dann in Schritt 180 zum Überwachen und Erkennen von anomalen Zuständen bzw. Fehlerzuständen verwendet werden. Während dieser Verwendung wird der trainierte Algorithmus auf während des Betriebs, der überwacht werden soll, erfasste aktuelle Datensätze angewendet, um als Ergebnis bzw. Ausgabe des Algorithmus eine Aussage zu erhalten, ob ein normaler, fehlerfreier Betriebszustand oder ein anomaler Betriebszustand der Maschine vorliegt. Vorzugsweise wird der Algorithmus auf Datenblöcke dieser aktuellen Datensätze angewendet, die entsprechend dem erfindungsgemäßen Verfahren aufbereitet wurden bzw. bereitgestellt werden.

Figur 2 stellt den Ablauf des Verfahrens gemäß einer bevorzugten Ausführungsform dar. In der Figur umfassen die beiden wesentlichen Schritte des Anpassens der Menge an Datensätzen in den Datenblöcken und des Normalisierens der Betriebsparameterwerte in den Datensätzen jeweils mehrere Teilschritte. Die Reihenfolge dieser Teilschritte kann im Allgemeinen auch anders sein, es muss also nicht zwangsläufig die dargestellte Reihenfolge eingehalten werden. Ebenso können im Allgemeinen einige der Teilschritte weggelassen werden, d.h. es müssen nicht alle dargestellten Teilschritte durchgeführt werden, oder zusätzliche Schritte vorhanden sein. Beides kann vom Fachmann abhängig von den Eigenschaften der ursprünglich erfassten Daten gewählt werden. In Figur 3 ist symbolisch die Struktur der in den einzelnen Teilschritten gemäß Figur 2 erhaltenen Datenblöcke dargestellt.

Die Datensätze umfassen beispielsweise drei Betriebsparameter 360, 370, 380, etwa einen Druck 360, eine Temperatur 370 und einen Volumenstrom 380. In Figur 3 sind diese durch Pfeile dargestellt, wobei die Zeit, zu der diese Betriebsparameter erfasst wurden, in Richtung der Pfeile verläuft. Ein vertikaler Schnitt in Figur 3 entspricht jeweils einem Datensatz und entsprechend den einem bestimmten Zeitpunkt (dem der Datensatz entspricht) zugeordneten Werten der Betriebsparameter.

In Schritt 110 werden zunächst Datenblöcke 310 gebildet (von denen nur ein Datenblock dargestellt ist), die jeweils über eine bestimmte Zeitspanne erstrecken.

In Schritt 241 wird ein Betriebsparameter, hier z.B. die Temperatur 370, aus den Datensätzen entfernt, so dass die Datensätze in Datenblock 341 nur noch Werte zu zwei Betriebsparametern (beispielsweise Druck 360 und Volumenstrom 380) umfassen.

In Schritt 242 werden fehlende Werte von Betriebsparametern, d.h. Werte die in bestimmten Datensätzen (zu bestimmten Zeitpunkten) nicht vorhanden sind nachgefüllt. In Figur 3 ist dies skizziert, indem die Lücken in den Linien, die Betriebsparameter symbolisieren, aufgefüllt werden, so dass ein Datenblock 342 mit vollständigen Datensätzen erhalten wird.

In Schritt 221 wird bei Bedarf (etwa bei zu geringer Rechenleistung) die Anzahl der Datensätze reduziert, um einen Datenblock 321 mit weniger Datensätze zu erhalten (symbolisiert durch kürzere Linien in Figur 3).

In Schritt 243 wird eine Art Fensterung durchgeführt, wobei jeder der Datensätze ergänzt wird um Werte von Betriebsparametern, die einem oder mehreren anderen Datensätzen entnommen sind, d.h. zu einem oder mehreren anderen Zeitpunkten erfasst wurden. So werden Betriebsparameterwerte von Datensätzen, die innerhalb eines zeitlichen Fensters liegen, in einen Datensatz aufgenommen. Auf diese Weise können zeitliche Abhängigkeiten direkt in die Datensätze eingeschlossen werden. Der so erhaltene Datenblock 343 enthält zusätzlich zu den ursprünglichen Betriebsparameterwerten noch die Betriebsparameterwerte anderer Datensätze. Z.B. kann neben dem Druck 360 zusätzlich der Druck 362 aus einem zeitlich vorhergehenden Datensatz und der Druck 364 aus einem noch weiter zurückliegenden Datensatz enthalten sein. Selbiges kann für andere Betriebsparameter durchgeführt werden, wobei die Datensätze, denen die weiteren Werte des jeweiligen Betriebsparameters entnommen sind, für verschiedene Betriebsparameter unabhängig voneinander sind.

In Schritt 244 werden aus vorhandenen Betriebsparameterwerten abgeleitete, d.h. aus diesen berechnete Werte, zu den Datensätzen hinzugefügt. Der erhaltene Datenblock 344 enthält dann zusätzlich die Werte 366 der abgeleiteten bzw. berechneten Parameter. Dies kann in Figur 3 z.B. eine Druckdifferenz zwischen im vorherigen Schritt 243 ergänzten Druckwerten aus anderen Datensätzen und dem aktuellen Druckwert sein.

In Schritt 245 wird der bzw. jeder Datenblock in Teildatenblöcke, hier beispielsweise zwei Teildatenblöcke 345, aufgeteilt, wobei jeder Teildatenblock die Datenwerte vorbestimmter Betriebsparameter umfasst, wobei im Prinzip ein Betriebsparameter auch in mehreren Teildatenblöcken enthalten sein kann.

In Schritt 246 wird erneut ein abgeleiteter Wert 368 berechnet, wobei der berechnete Wert in den Datensätzen einen Betriebsparameterwert, aus dem er berechnet wurde, ersetzt, d.h. der Betriebsparameterwert, hier 366, wird nach der Berechnung gelöscht. In Figur 3 ist etwa in einem der Teildatenblöcken 346 der vorherige Parameter 366 durch z.B. eine FFT 368 desselben ersetzt.

In Schritt 222 werden Datensätze gelöscht, die Betriebsparameter mit Werten außerhalb eines vorgegebenen Wertebereichs aufweisen, z.B. um Daten die während eines Standby-Betriebs erfasst wurden, herauszufiltern. In Figur 3 ist der erhaltene Datenblock 322 mit lückenhaften Datenlinien dargestellt, wobei die Lücken die entfernten Datensätze symbolisieren.

In Schritt 223 wird eine Datenaugmentierung durchgeführt, bei der neue Datensätze gebildet werden, die auf bereits vorhandenen Datensätzen basieren, indem die Parameterwerte der neuen Datensätze aus den Parameterwerten der vorhandenen Datensätze durch eine zufällige Variation (plus/minus einen zufälligen Prozentwert) gebildet werden. Die Anzahl der Datensätze im Datenblock 323 wird dadurch vergrößert, hier beispielhaft in etwa verdoppelt.

In den Schritten 247 und 248 werden eine Normierung und eine Skalierung der Betriebsparameterwerte durchgeführt, so dass die in den Datenblöcken 347, 348 enthaltenen Betriebsparameterwerte in einer Form und einem Wertebereich liegen, der für die Verarbeitung in ML-Algorithmen gut geeignet ist.

## Patentansprüche

1. Vorverarbeitungsverfahren zur Bereitstellung homogener Datenblöcke aus zeitlich geordneten, inhomogenen Datensätzen mit Werten erfasster Betriebsparameter einer Maschine, um für die Überwachung der Maschine durch auf maschinellem Lernen basierende Algorithmen geeignete Datenblöcke zu erhalten, umfassend
Bilden (110, 120) von Datenblöcken aus den Datensätzen, so dass jeder Datenblock die Datensätze umfasst, die innerhalb einer jeweiligen Zeitspanne liegen;
Anpassen (120) der Menge von Datensätzen in den Datenblöcken, so dass die Datenblöcke eine vorbestimmte Anzahl vollständiger Datensätze enthalten; und
Normalisieren (140) der Datensätze in den Datenblöcken, so dass die Datensätze Werte für vorbestimmte Betriebsparameter aufweisen, die innerhalb vorbestimmter Wertebereiche liegen.

2. Vorverarbeitungsverfahren nach Anspruch 1, wobei das Normalisieren umfasst:
Entfernen (241) der zu mindestens einem vorbestimmten Betriebsparameter gehörigen Betriebsparameterwerte aus allen Datensätzen.

3. Vorverarbeitungsverfahren nach einem der vorstehenden Ansprüche, wobei das Normalisieren umfasst:
Bestimmen von Datensätzen, in denen mindestens ein Betriebsparameterwert fehlt,
Ergänzen (242) der fehlenden Betriebsparameterwerte in den bestimmten Datensätzen mit entsprechenden auf Grundlage anderer Datensätze ermittelten Betriebsparameterwerten, bevorzugt dem jeweils vorhergehenden oder nachfolgenden Datensatz, oder mit einem vorbestimmten Wert.

4. Vorverarbeitungsverfahren nach einem der vorstehenden Ansprüche, wobei das Anpassen für mindestens einen der Datenblöcke umfasst:
Löschen (221) eines oder mehrerer Datensätze aus dem mindestens einen Datenblock, wobei bevorzugt der eine oder die mehreren Datensätze zufällig ausgewählt sind oder aufeinanderfolgende Datensätze sind, die weiter bevorzugt am Ende des mindestens einen Datenblocks liegen.

5. Vorverarbeitungsverfahren nach einem der vorstehenden Ansprüche, wobei das Normalisieren für jeden Datensatz und für mindestens einen Betriebsparameter umfasst:
Hinzufügen (243) der Werte des mindestens einen Betriebsparameters aus einem oder mehreren Datensätzen zu dem Datensatz, wobei die zeitliche Position des einen oder der mehreren Datensätze relativ zum dem Datensatz, zu dem sie hinzugefügt werden jeweils die gleiche ist, wobei bevorzugt der eine oder die mehreren Datensätze zeitlich unmittelbar vor und/oder nach dem Datensatz liegen, zu dem sie hinzugefügt werden.

6. Vorverarbeitungsverfahren nach einem der vorstehenden Ansprüche, wobei das Normalisieren umfasst:
Ergänzen (244, 246) jedes der Datensätze um einen aus den Betriebsparameterwerten von mindestens einem Datensatz abgeleiteten Betriebsparameterwert,
wobei der abgeleitete Betriebsparameterwert aus den im jeweiligen Datensatz enthaltenen Betriebsparameterwerten berechnet wird (244), oder
der abgeleitete Betriebsparameterwert aus Betriebsparameterwerten mehrerer Datensätze berechnet wird (246), wobei insbesondere Werte einer schnellen Fourier-Transformation berechnet werden.

7. Vorverarbeitungsverfahren nach Anspruch 6, weiterhin umfassend
Löschen der Werte mindestens eines Betriebsparameters, aus dem die abgeleiteten Betriebsparameterwerte berechnet wurden, in den Datensätzen.

8. Vorverarbeitungsverfahren nach einem der vorstehenden Ansprüche, weiterhin umfassend:
Festlegen mehrerer Gruppen von Betriebsparametern;
Bilden mehrerer Teildatensätze aus jedem Datensatz, wobei die Teildatensätze jeweils Werte einer der Gruppen von Betriebsparametern enthalten;
Bilden (245) mehrerer Teildatenblöcke aus jedem der Datenblöcke, so dass die Teildatenblöcke jeweils die einer der Gruppen von Betriebsparametern entsprechenden Teildatensätze enthalten.

9. Vorverarbeitungsverfahren nach einem der vorstehenden Ansprüche, wobei das Anpassen umfasst:
Löschen (222) von Datensätzen, die mindestens einen Betriebsparameter mit einem Wert innerhalb oder außerhalb eines vorbestimmten Wertebereichs für den jeweiligen Betriebsparameter aufweisen.

10. Vorverarbeitungsverfahren nach einem der vorstehenden Ansprüche, wobei das Anpassen für mindestens einen Datenblock umfasst:
Hinzufügen (223) von mindestens einem Datensatz zu dem mindestens einen Datenblock, wobei der mindestens eine Datensatz, der hinzugefügt wird, auf einem vorhandenen Datensatz basiert, wobei bevorzugt die Werte der Betriebsparameter in dem vorhandenen Datensatz innerhalb einer vorbestimmten Bandbreite oder entsprechend einer statistischen Verteilung variiert werden, wobei, falls mehrere Datensätze basierend auf dem vorhandenen Datensatz hinzugefügt werden, die Betriebsparameterwerte unterschiedlicher hinzuzufügender Datensätze unabhängig voneinander variiert werden.

11. Vorverarbeitungsverfahren nach einem der vorstehenden Ansprüche, wobei das Normalisieren umfasst:
Normieren (247) der Betriebsparameterwerte,
wobei das Normieren bevorzugt ein Ändern von Betriebsparameterwerten umfasst, die größer als ein vorbestimmter Maximalwert oder kleiner als ein vorbestimmter Minimalwert des jeweiligen Betriebsparameters sind, auf einen Wert, der gleich dem vorbestimmten Maximalwert bzw. dem vorbestimmten Minimalwert ist.

12. Vorverarbeitungsverfahren nach einem der vorstehenden Ansprüche, wobei das Normalisieren umfasst:
Skalieren (248) der Betriebsparameterwerte auf einen vorbestimmten Wertebereich, wobei der vorbestimmte Wertebereich bevorzugt zwischen 0 und 1 oder zwischen -1 und 1 liegt.

13. Recheneinheit, die dazu eingerichtet ist, ein Vorverarbeitungsverfahren nach einem der vorstehenden Ansprüche durchzuführen.

14. Computerprogramm, das eine Recheneinheit veranlasst, ein Vorverarbeitungsverfahren nach einem der Ansprüche 1 bis 12 durchzuführen, wenn es auf der Recheneinheit ausgeführt wird.

15. Maschinenlesbares Speichermedium mit einem darauf gespeicherten Computerprogramm nach Anspruch 14.
